Europäisches Patentamt

European Patent Office

Office européen des brevets

(11) Publication number: **0 273 879 B1**

# EUROPEAN PATENT SPECIFICATION

(45) Date of publication of patent specification: **18.09.91**  (51) Int. Cl.⁵: **B60S  1/24**

(21) Application number: **87830419.5**

(22) Date of filing: **24.11.87**

(54) A crank device for operating a motor vehicle windscreen-wiper.

(30) Priority: **30.12.86 IT 5427686 U**

(43) Date of publication of application:
**06.07.88 Bulletin  88/27**

(45) Publication of the grant of the patent:
**18.09.91 Bulletin  91/38**

(84) Designated Contracting States:
**AT BE CH DE ES FR GB GR IT LI LU NL SE**

(56) References cited:
**DE-A- 3 419 132**

(73) Proprietor: **INDUSTRIE MAGNETI MARELLI S.p.A.**
**Via Adriano 81**
**I-20128 Milano(IT)**

(72) Inventor: **Pedani, Giuseppe**
**Via Cannicci, 7**
**I-53037 San Gimignano Siena(IT)**

(74) Representative: **Notaro, Giancarlo et al**
**c/o Jacobacci-Casetta & Perani S.p.A. Via Alfieri, 17**
**I-10121 Torino(IT)**

## Description

The present invention relates to a crank device for operating a motor vehicle windscreen-wiper, of the type arranged to enable the windsreen-wiper blades to be brought into rest positions, beyond their normal end-of-stroke positions, as a result of a rotation of the geared motor unit in the opposite sense, the device including two half-cranks articulated together and connected at their opposite ends to the output shaft of the geared motor unit and to a connecting rod for driving the windscreen-wiper respectively.

A device of the type indicated above is described and illustrated, for example, in Italian Patent Application IT-A-21264-A/83 and in the corresponding French Patent Application (FR-A-2 546 459 or GB-A-2 140 289). This device is not always reliable in operation since dust and dirt accumulating in the zone of articulation between the two half-cranks expose it to the risk of jamming.

The object of the present invention is to overcome this problem in a simple and economical manner.

The principal characteristic of the invention lies in the fact that the two half-cranks are constituted by two discs, mounted for reciprocal rotation and defining between then a closed cavity which is filled with lubricant.

The invention will now be described with reference to the appended drawings, provided purely by way of non-limiting example, in which:

Figure 1 is a schematic view of a motor-vehicle windscreen-wiper device, with the windscreen-wiper blades in their normal end-of-stroke positions,

Figure 2 illustrates the windscreen-wiper device of Figure 1 in the rest position, situated beyond the end-of-stroke position illustrated in Figure 1,

Figure 3 is a sectional view of the device according to the invention, and

Figures 4 and 5 are two frontal views of the two discs making up the device according to the invention.

With reference to the drawings, reference numeral 1 generally indicates a windscreen-wiper device comprising a pair of windscreen-wiper blades 2 which are rotatably supported at 3 and driven by a geared motor unit (not illustrated) - including an electric motor and a reduction gear unit - by means of a lever system 4. The lever system 4 comprises a pair of arms 5 connected to the windscreen-wiper blades and a pair of connecting rods 6, 6 for connecting these arms to a crank device 7.

The crank device 7 comprises two half-cranks 8, 9, articulated together at 10 and having their opposite ends 11, 12 connected to the output shaft of the geared motor unit and to the connecting rod 6, respectively.

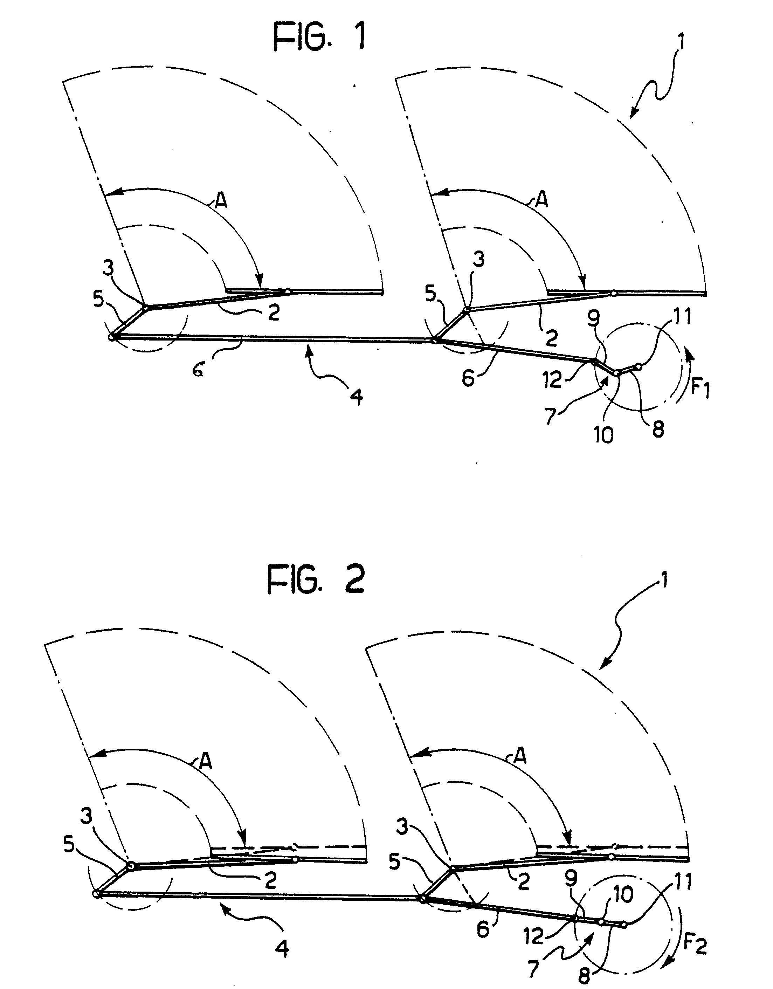

During normal operation of the windscreen-wiper, the crank device 7 rotates in the sense indicated by the arrow F1 in Figure 1. As a result of this rotation, the windscreen-wiper blades cover the angles indicated A in Figure 1. In this condition, the half-cranks 8, 9 are inclined to each other at a constant angle, illustrated in Figure 1, due to the mutual interengagement of stop means (which will be described below) provided on the two half-cranks. Figure 1 illustrates the two blades in their lower end-of-stroke positions. When the windscreen-wiper device is not in use, the two blades 2 can be brought to rest positions beyond their normal end-of-stroke positions, by means of a rotation of the geared motor unit in the opposite sense (arrow F2 of Figure 2) so as to lengthen the crank device 7.

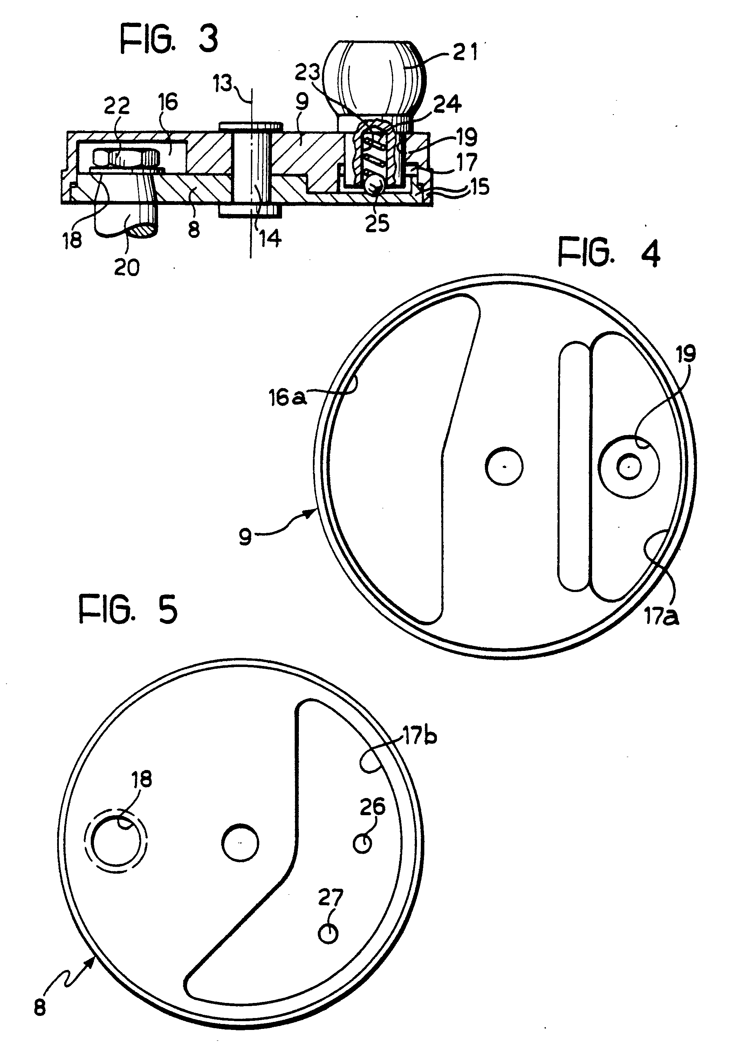

As can be seen in Figure 3, the two half-cranks 8, 9 consist of two circular discs (for example, of plastics material) reciprocally articulated about an axis 13 by means of an articulation pin 14 and defining between them a closed cavity which is filled with lubricant, preferably grease. The peripheral edges 15 of the two discs 8, 9 are sealingly engaged with each other. The cavity between the two discs consists of two chambers 16, 17 - defined by recesses 16a, 17a, 17b (Figures 4, 5) formed in the facing surfaces of the two discs -which supply the articulation pin 14 with grease through the gap between the two central parts of the two discs.

The two discs 8, 9 also have respective apertures 18, 19 for the passage of two members 20, 21 for connection to the output shaft of the geared motor unit and to the connecting rod 6 for driving the windscreen-wipers respectively.

The connecting member 20 consists of a shaft with a bevelled portion which is inserted in the hole 18, of corresponding shape, and locked by means of a nut 22. The connecting member 21 consists of a round-headed pin having a shaft in which an axial hole 23 is formed. A spring 24 is housed in this hole and urges a ball 25 into engagement with the surface of the disc 8. Two reference indentations 26, 27 are formed in this surface for receiving the ball 25 in the condition of maximum length of the crank 7 and in the normal operating condition of the windscreen-wiper, respectively. The ball 25 and the indentation 27 constitute the stop means which prevent relative rotation of the two half-cranks during normal operation of the windscreen-wiper.

## Claims

1. A crank device for operating a motor vehicle windscreen-wiper, arranged to carry the windscreen-wiper blades into rest positions, beyond their normal end-of-stroke positions, as a result of a rotation of the geared motor unit in the opposite sense, the device comprising two half-cranks (8, 9) articulated together and connected at their opposite ends to the output shaft (20) of the geared motor unit and to a connecting rod (6) for driving the windscreen-wiper, respectively,

characterised in that the two half-cranks (8, 9) consist of two discs defining between them a cavity filled with lubricant.

2. A device according to Claim 1, characterised in that the two discs are articulated together by means of a central articulation pin (14) and have peripheral edges (15) sealingly engaged with each other.

3. A device according to Claim 1, characterised in that the two discs 8, 9 have respective apertures (18, 19) for the passage of two members (20, 21) for connection to the output shaft of the geared motor unit and to the connecting rod (6) for driving the windscreen-wiper, respectively.

4. A device according to Claim 3, characterised in that the two discs are formed of sintered metal and have recesses (16a, 17a, 17b) in their facing surfaces which define the cavity filled with lubricant.

5. A device according to Claim 1, characterised in that the two discs are provided with stop means which cooperate with each other to define the two limit positions of the relative rotation of the two discs.

6. A device according to Claim 5, characterised in that the stop means comprise a ball carried by one of the two discs for cooperation with reference indentations provided in the other disc, and resilient means urging the ball into engagement with the indentations.

## Revendications

1. Dispositif à manivelle pour faire fonctionner un essuie-glace de véhicule à moteur, disposé pour porter les lames de l'essuie-glace dans des positions de repos, au-delà de leurs positions normales de fin de course, en raison d'une rotation de l'unité de moteur à engrenage dans le sens opposé, le dispositif comprenant deux demi-manivelles (8, 9) articulées ensemble et reliées, au niveau de leurs extrémités opposées, à l'arbre de sortie (20) de l'unité de moteur à engrenage et à une bielle (6) pour entraîner l'essuie-glace, respectivement, caractérisé en ce que les deux demi-manivelles (8, 9) sont composées de deux disques définissant entre eux une cavité remplie de matière lubrifiante.

2. Dispositif selon la revendication 1, caractérisé en ce que les deux disques sont articulés ensemble au moyen d'un axe d'articulation central (14) et ont des bords périphériques (15) mis en contact étanche l'un avec l'autre.

3. Dispositif selon la revendication 1, caractérisé en ce que les deux disques (8, 9) ont des ouvertures respectives (18, 19) pour le passage de deux éléments (20, 21) pour être raccordés à l'arbre de sortie de l'unité de moteur à engrenage et à la bielle (6) pour entraîner l'essuie-glace, respectivement.

4. Dispositif selon la revendication 3, caractérisé en ce que les deux disques sont formés de métal fritté et ont des creux (16a, 17a, 17b) dans leurs surfaces se faisant face qui définissent la cavité remplie de matière lubrifiante.

5. Dispositif selon la revendication 1, caractérisé en ce que les deux disques sont munis de moyens de butée qui coopèrent l'un avec l'autre pour définir les deux positions limites de la rotation relative des deux disques.

6. Dispositif selon la revendication 5, caractérisé en ce que les moyens de butée comprennent une bille portée par l'un des deux disques pour coopérer avec des encoches de référence situées dans l'autre disque, et des moyens élastiques poussant la bille en contact avec les encoches.

## Patentansprüche

1. Kurbelvorrichtung zum Betätigen eines Kraftfahrzeugscheibenwischers, der zum Verbringen der Scheibenwischblätter in Ruhestellung außerhalb ihrer normalen End-Hubstellung als Ergebnis einer Drehung der im Eingriff stehenden Motoreinheit in die entgegengesetzte Richtung angeordnet ist, wobei die Vorrichtung zwei Halbkurbeln (8,9) aufweist, die an ihren gegenüberliegenden Enden mit einer Ausgangswelle (20) der im Eingriff stehenden Motoreinheit und mit einer Verbindungsstange (6) zum Antrieb des jeweiligen Scheibenwischers zusammengefügt und verbunden ist, **dadurch gekennzeichnet, daß** die beiden Halbkurbeln (8,9) aus zwei Scheiben bestehen, die zwischen sich eine mit Schmiermittel gefüllte Höhlung begrenzen.

2. Vorrichtung gemäß Anspruch 1, **dadurch gekennzeichnet, daß** die beiden Scheiben mit einem zentralen Verbindungsstift (14) zusammengefügt sind und über dem Umfang Kanten (15) aufweisen, die zum Abdichten miteinander im Eingriff stehen.

3. Vorrichtung gemäß Anspruch 1, **dadurch gekennzeichnet, daß** die zwei Scheiben (8,9) jeweils Öffnungen (18,19) für den Durchgang von zwei Verbindungsgliedern (20,21) für die Verbindung zu der Ausgangswelle der im Eingriff stehenden Motoreinheit und zu der Verbindungsstange (6) für den Antrieb des jeweiligen Scheibenwischers aufweist.

4. Vorrichtung gemäß Anspruch 3, **dadurch gekennzeichnet,daß** die beiden Scheiben aus gesintertem Metall geformt sind und Ausnehmungen (16a,17a,17b) in ihren gegenüberliegenden Flächen aufweisen, welche die mit Schmiermittel gefüllte Höhlung begrenzen.

5. Vorrichtung gemäß Anspruch 5, **dadurch gekennzeichnet, daß** die beiden Scheiben mit Anschlagvorrichtungen versehen sind, die miteinander zusammenarbeiten, um die zwei Grenzstellungen der relativen Drehung der zwei Scheiben festzulegen.

6. Vorrichtung gemäß Anspruch 5, **dadurch gekennzeichnet,daß** die Anschlagvorrichtungen eine von einer der zwei Scheiben getragene Kugel zur Zusammenarbeit Bezugskerben, die in der anderen Scheibe vorgesehen sind, aufweisen und **daß** elastische Vorrichtungen die Kugel in den Eingriff mit den Kerben pressen.

# FIG. 1

# FIG. 2

# FIG. 3

# FIG. 4

# FIG. 5